# EUROPEAN PATENT APPLICATION

(11) **EP 3 979 178 A1**
(43) Date of publication of application: **06.04.2022**
(21) Application number: 21165079.1
(22) Date of filing: 25.03.2021
(51) Int. Cl.: G06Q 40/02, G06Q 10/04, G06Q 30/02

(54) **METHOD, APPARATUS, AND ELECTRONIC DEVICE FOR COLLECTING LOAN AND STORAGE MEDIUM**

(30) Priority: 30.09.2020 CN 202011066237
(71) Applicant: BEIJING BAIDU NETCOM SCIENCE AND TECHNOLOGY CO. LTD., 100085 Beijing (CN)
(72) Inventor: FENG, Bohao, BEIJING, 100085 (CN); PANG, Minhui, BEIJING, 100085 (CN); XIE, Guobin, BEIJING, 100085 (CN)
(74) Representative: Cabinet Beau de Loménie

(57) **Abstract**

The present disclosure discloses a method, apparatus, and electronic device for collecting a loan, and a storage medium, relates to the field of big data technology. A particular plan is: acquiring (S101) information on latitude and longitude of overdue customers and longitude and 1 debt-collectors, respectively; calculating (S 102) initial paths of the debt-collectors and the overdue customers, based on the information on latitude and longitude of the overdue customers and the debt-collectors; calculating (SI03) target overdue customers that the debt-collectors are responsible for and target paths of the debt-collectors and the target overdue customers that the debt-collectors are responsible for, based on the initial paths of the debt-collectors and the overdue customers; and providing (S104) the target overdue customers and the target paths to the debt-collectors, so that the debt-collectors collect loans in accordance with the target overdue customers and the target paths.

## Description

### TECHNICAL FIELD

The present disclosure relates to the field of artificial intelligence, and further relates to the field of big data technology, in particular to a method, apparatus, and electronic device for collecting a loan, and relates to a storage medium.

### BACKGROUND

Personal loans refer to loans issued by banks or other financial institutions to natural persons who meet loan conditions for personal consumption expenditures, production and operation and other purposes. Loan/debt collection is mainly for customers who are overdue and have not repaid their loans.

At present, the market is generally concerned about non-performing loans of financial institutions. Affected by the market economy, with the accumulation and exposure of credit risks in some industries, the asset quality of the financial industry will continue to be under pressure in the future. As the top priority in post-loan management, loan/debt collection is also an effective means for the financial institutions to reduce the balance of non-performing loans. However, in the condition of the current very large base of overdue transactions, collection business volume continues to rise. A large number of customers fail to repay their debts on time after making loans, causing malicious overdue. Consumer finance companies often need debt-collectors to perform offline collection tasks. Due to the large number of overdue customers and limited debt-collectors, how to complete a collection task at a certain cost becomes a major problem for the financial institutions.

Currently, for collection issues, manual allocation is still performed based on the principle of proximity. The customer closest to a certain debt-collector is allocated to the debt-collector. For the scheme of manual allocation based on the principle of proximity, since there is no overall path planning, it would be likely to lead to high collection costs and low collection efficiency. Therefore, how to formulate a collection scheme, realize a reasonable planning of a collection path, minimize a total itinerary, and minimize an expense becomes an important focus of the financial institutions.

### SUMMARY

The present disclosure provides a method, apparatus, and electronic device for collecting a loan, and a storage medium, which may effectively reduce collection costs and improve collection efficiency.

In a first aspect, embodiments of the present disclosure provide a method for collecting a loan, comprising: acquiring information on latitude and longitude of overdue customers and debt-collectors, respectively; calculating initial paths of the debt-collectors and the overdue customers, based on the information on latitude and longitude of the overdue customers and the debt-debt-collectors; calculating target overdue customers that the debt-debt-collectors are responsible for and target paths of the debt-debt-collectors and the target overdue customers that the debt-debt-collectors are responsible for using a genetic algorithm, based on the initial paths of the debt-debt-collectors and the overdue customers; and providing the target overdue customers and the target paths to the debt-debt-collectors, so that the debt-debt-collectors collect loans in accordance with the target overdue customers and the target paths.

In a second aspect, embodiments of the present disclosure provide an apparatus for collecting a loan, comprising: the acquisition module, configured to acquire information on latitude and longitude of overdue customers and debt-collectors respectively; the calculation module, configured to calculate initial paths of the debt-collectors and the overdue customers, based on the information on latitude and longitude of the overdue customers and the debt-collectors respectively; calculate target overdue customers that the debt-collectors are responsible for and target paths of the debt-collectors and the target overdue customers that the debt-collectors are responsible for using a genetic algorithm, based on the initial paths of the debt-collectors and the overdue customers; and the providing module, configured to provide the target overdue customers and the target paths to the debt-collectors, so that the debt-collectors collect loans in accordance with the target overdue customers and the target paths.

In a third aspect, embodiments of the present disclosure provide an electronic device, comprising: one or more processors; and a storage apparatus, storing one or more programs thereon, wherein the one or more programs, when executed by the one or more processors, cause the one or more processors to implement the method for collecting a loan provided by the first aspect.

In a forth aspect, embodiments of the present disclosure provide a computer-readable medium, storing a computer program thereon, wherein the program, when executed by a processor, causes the processor to implement the method for collecting a loan provided by the first aspect.

In a fifth aspect, embodiments of the present disclosure provide a computer program product including a computer program, where the computer program, when executed by a processing apparatus, implements the method for collecting a loan provided by the first aspect.

According to the technology of the present disclosure, the technical problem of easily leading to high collection costs and low collection efficiency due to the lack of overall path planning in a scheme of manual allocation based on the principle of proximity in the prior art is solved. The technical solution provided by the present disclosure may effectively reduce collection costs and improve collection efficiency.

It should be understood that the content described in this section is not intended to identify key or important features of the embodiments of the present disclosure, nor is it intended to limit the scope of the present disclosure. Other features of the present disclosure will be easily understood by the following description.

### BRIEF DESCRIPTION OF THE DRAWINGS

The accompanying drawings are used to better understand the present solution and do not constitute a limitation to the present disclosure, in which:
Fig. 1 is a first schematic flowchart of a method for collecting a loan provided by an embodiment of the present disclosure;
Fig. 2 is a second schematic flowchart of the method for collecting a loan provided by an embodiment of the present disclosure;
Fig. 3 is a third schematic flowchart of the method for collecting a loan provided by an embodiment of the present disclosure;
Fig. 4 is a schematic structural diagram of a system for collecting a loan provided by an embodiment of the present disclosure;
Fig. 5 is a schematic structural diagram of an apparatus for collecting a loan provided by an embodiment of the present disclosure;
Fig. 6 is a schematic structural diagram of a calculation module provided by an embodiment of the present disclosure; and
Fig. 7 is a block diagram of an electronic device used to implement the method for collecting a loan according to an embodiment of the present disclosure.

### DETAILED DESCRIPTION OF EMBODIMENTS

The following describes exemplary embodiments of the present disclosure with reference to the accompanying drawings, which comprise various details of the embodiments of the present disclosure to facilitate understanding, and should be regarded as merely exemplary. Therefore, those of ordinary skill in the art should realize that various changes and modifications may be made to the embodiments described herein without departing from the scope and spirit of the present disclosure. Likewise, for clarity and conciseness, descriptions of well-known functions and structures are omitted in the following description.

### Embodiment 1

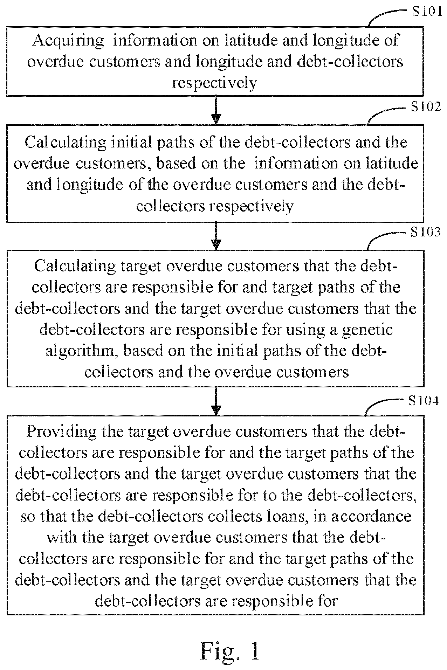

Fig. 1 is a schematic flowchart of a method for collecting a loan provided in Embodiment 1 of the present disclosure. The method may be performed by an apparatus for collecting a loan or an electronic device. The apparatus or the electronic device may be implemented by software and/or hardware. The apparatus or the electronic device may be integrated in any smart device having a network communication function. As shown in Fig. 1, the method for collecting a loan may comprise the following steps:
S101, acquiring information on latitude and longitude of overdue customers and longitude and debt-collectors respectively.

In this step, the electronic device acquires the information on latitude and longitude of the overdue customers and the debt-collectors respectively. Assuming that all the debt-collectors are M, M is a natural number greater than 1. The electronic device may code the debt-collectors in advance, namely: collector 1, collector 2, ..., collector M; assuming that all the overdue customers are N, N is a natural number greater than 1. The electronic device may also code the overdue customers in advance, namely: overdue customer 1, overdue customer 2, ..., overdue customer N. Therefore, the electronic device may acquire information on latitude and longitude of the collector 1, the collector 2,..., the collector M, and may also acquire information on latitude and longitude of the overdue customer 1, the overdue customer 2,..., the overdue customer N.

S102, calculating initial paths of the debt-collectors and the overdue customers, based on the information on latitude and longitude of the overdue customers and the debt-collectors respectively.

In this step, the electronic device may calculate the initial paths of the debt-collectors and the overdue customers, based on the information on latitude and longitude of the overdue customers and the debt-collectors. The electronic device may divide all the overdue customers into at least one location region based on the information on latitude and longitude of the overdue customers; and then calculate the initial paths of the debt-collectors and the overdue customers, based on the information on latitude and longitude of the debt-collectors and the location region corresponding to the overdue customers.

S103, calculating target overdue customers that the debt-collectors are responsible for and target paths of the debt-collectors and the target overdue customers that the debt-collectors are responsible for using a genetic algorithm, based on the initial paths of the debt-collectors and the overdue customers.

In this step, the electronic device may calculate the target overdue customers that the debt-collectors are responsible for and the target paths of the debt-collectors and the target overdue customers that the debt-collectors are responsible for using the genetic algorithm, based on the initial paths of the debt-collectors and the overdue customers. The genetic algorithm (referred to as GA) is designed and proposed based on the evolutionary laws of organisms in nature. It is a computational model that simulates the biological evolution process of natural selection and genetic mechanism of Darwinian Theory of Biological Evolution, and is a method for searching for an optimal solution by simulating natural evolution. The algorithm transforms a problem-solving process into a process similar to crossover and mutation of chromosomal genes in biological evolution by means of mathematics, using computer simulation operations. When solving more complex combinatorial optimization problems, compared with some conventional optimization algorithms, the algorithm may usually obtain better optimization results faster. The genetic algorithm has been widely used in the fields of combinatorial optimization, machine learning, signal processing, self-adaptive control and artificial life by people. A basic framework of the genetic algorithm may comprise: coding, fitness function, and initial population selection; and an operation process of the genetic algorithm may comprise: initialization, individual evaluation, selection operation, crossover operation, mutation operation, and termination condition judgment.

S104, providing the target overdue customers that the debt-collectors are responsible for and the target paths of the debt-collectors and the target overdue customers that the debt-collectors are responsible for to the debt-collectors, so that the debt-collectors collects loans, in accordance with the target overdue customers that the debt-collectors are responsible for and the target paths of the debt-collectors and the target overdue customers that the debt-collectors are responsible for.

In this step, the electronic device may provide the target overdue customers that the debt-collectors are responsible for and the target paths of the debt-collectors and the target overdue customers that the debt-collectors are responsible for to the debt-collectors, so that the debt-collectors collects loans, in accordance with the target overdue customers that the debt-collectors are responsible for and the target paths of the debt-collectors and the target overdue customers that the debt-collectors are responsible for. The electronic device may display the target overdue customers that the debt-collectors are responsible for and the target paths of the debt-collectors and the target overdue customers that the debt-collectors are responsible for to the debt-collectors through a human-machine interaction interface. The debt-collectors may view the target overdue customers that the debt-collectors are responsible for and the target paths of the debt-collectors and the target overdue customers that the debt-collectors are responsible for on the human-machine interaction interface.

The method for collecting a loan proposed in the embodiment of the present disclosure, first acquires the information on latitude and longitude of the overdue customers and the debt-collectors; then calculates the initial paths of the debt-collectors and the overdue customers, based on the information on latitude and longitude of the overdue customers and the debt-collectors; then calculates the target overdue customers that the debt-collectors are responsible for and the target paths of the debt-collectors and the target overdue customers that the debt-collectors are responsible for using the genetic algorithm, based on the initial paths of the debt-collectors and the overdue customers; and finally provides the target overdue customers that the debt-collectors are responsible for and the target paths of the debt-collectors and the target overdue customers that the debt-collectors are responsible for to the debt-collectors, so that the debt-collectors collects loans, in accordance with the target overdue customers that the debt-collectors are responsible for and the target paths of the debt-collectors and the target overdue customers that the debt-collectors are responsible for. That is, the present disclosure may use the genetic algorithm to calculate the target overdue customers that the debt-collectors are responsible for and the target paths of the debt-collectors and the target overdue customers that the debt-collectors are responsible for. However, in the existing methods for collecting a loan, the scheme of manual allocation is based on the principle of proximity, since there is no overall path planning, it may easily lead to high collection costs and low collection efficiency. Since the present disclosure uses the genetic algorithm to calculate the target overdue customers that the debt-collectors are responsible for and the target paths of the debt-collectors and the target overdue customers that the debt-collectors are responsible for, it overcomes the technical problem of easily leading to high collection costs and low collection efficiency due to the lack of overall path planning in the scheme of manual allocation based on the principle of proximity in the prior art. The technical solution provided by the present disclosure may effectively reduce collection costs and improve collection efficiency. In addition, the technical solution of the embodiments of the present disclosure is simple and convenient to implement, easy to popularize, and has a wider application range.

### Embodiment 2

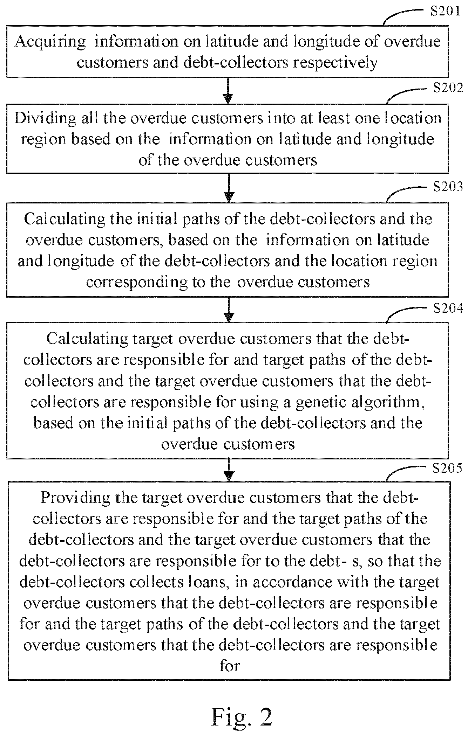

Fig. 2 is a second schematic flowchart of the method for collecting a loan provided by an embodiment of the present disclosure. Based on the above technical solution, it is further optimized and expanded, and may be combined with the above alternative embodiments. As shown in Fig. 2, the method for collecting a loan may comprise the following steps:
S201, acquiring information on latitude and longitude of overdue customers and debt-collectors respectively.
S202, dividing all the overdue customers into at least one location region based on the information on latitude and longitude of the overdue customers.

In this step, the electronic device may divide all the overdue customers into the at least one location region based on the information on latitude and longitude of the overdue customers. The electronic device may perform cluster analysis on all the overdue customers based on the information on latitude and longitude of the overdue customers; and divide the overdue customers into their regions, then collect in groups by regions. The information may be displayed on the interaction interface, and a manager may understand the overdue situation in the regions by viewing this information. The overdue situation in different regions may be displayed on the human-machine interaction interface through different degrees of color; the darker the color, the more serious the overdue situation in that region. The information may be used as a reference variable in loan approval; the manager may also refer to risk levels of the regions to reduce the cost of later collection from the source.

S203, calculating the initial paths of the debt-collectors and the overdue customers, based on the information on latitude and longitude of the debt-collectors and the location region corresponding to the overdue customers.

S204, calculating target overdue customers that the debt-collectors are responsible for and target paths of the debt-collectors and the target overdue customers that the debt-collectors are responsible for using a genetic algorithm, based on the initial paths of the debt-collectors and the overdue customers.

S205, providing the target overdue customers that the debt-collectors are responsible for and the target paths of the debt-collectors and the target overdue customers that the debt-collectors are responsible for to the debt- s, so that the debt-collectors collects loans, in accordance with the target overdue customers that the debt-collectors are responsible for and the target paths of the debt-collectors and the target overdue customers that the debt-collectors are responsible for.

The method for collecting a loan proposed in the embodiment of the present disclosure, first acquires the information on latitude and longitude of the overdue customers and on the longitude and latitude of the debt-collectors; then calculates the initial paths of the debt-collectors and the overdue customers, based on the information on latitude and longitude of the overdue customers and the longitude and latitude information of the debt-collectors; then calculates the target overdue customers that the debt-collectors are responsible for and the target paths of the debt-collectors and the target overdue customers that the debt-collectors are responsible for using the genetic algorithm, based on the initial paths of the debt-collectors and the overdue customers; and finally provides the target overdue customers that the debt-collectors are responsible for and the target paths of the debt-collectors and the target overdue customers that the debt-collectors are responsible for to the debt-collectors, so that the debt-collectors collects loans, in accordance with the target overdue customers that the debt-collectors are responsible for and the target paths of the debt-collectors and the target overdue customers that the debt-collectors are responsible for. That is, the present disclosure may use the genetic algorithm to calculate the target overdue customers that the debt-collectors are responsible for and the target paths of the debt-collectors and the target overdue customers that the debt-collectors are responsible for. However, in the existing methods for collecting a loan, the scheme of manual allocation is based on the principle of proximity, since there is no overall path planning, it may easily lead to high collection costs and low collection efficiency. Since the present disclosure uses the genetic algorithm to calculate the target overdue customers that the debt-collectors are responsible for and the target paths of the debt-collectors and the target overdue customers that the debt-collectors are responsible for, it overcomes the technical problem of easily leading to high collection costs and low collection efficiency due to the lack of overall path planning in the scheme of manual allocation based on the principle of proximity in the prior art. The technical solution provided by the present disclosure may effectively reduce collection costs and improve collection efficiency. In addition, the technical solution of the embodiments of the present disclosure is simple and convenient to implement, easy to popularize, and has a wider application range.

### Embodiment 3

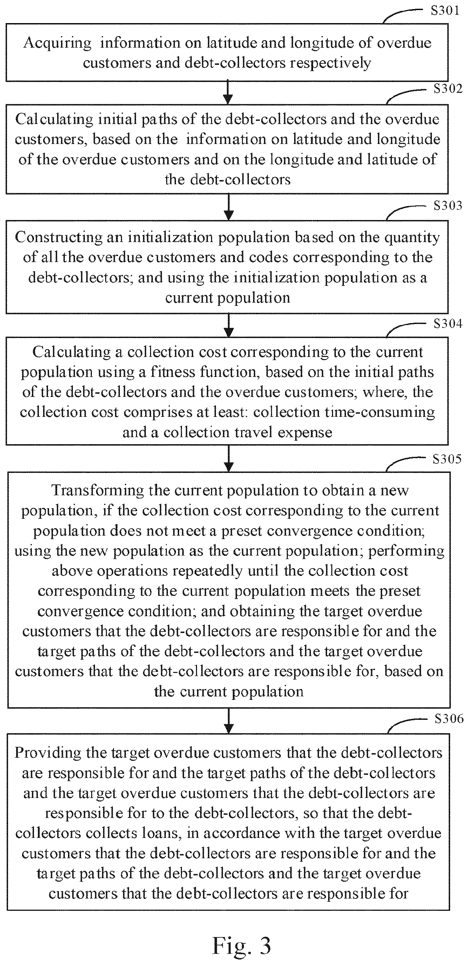

Fig. 3 is a third schematic flowchart of the method for collecting a loan provided by an embodiment of the present disclosure. Based on the above technical solution, it is further optimized and expanded, and may be combined with the above alternative embodiments. As shown in Fig. 2, the method for collecting a loan may comprise the following steps:
S301, acquiring information on latitude and longitude of overdue customers and debt-collectors respectively.
S302, calculating initial paths of the debt-collectors and the overdue customers, based on the information on latitude and longitude of the overdue customers and on the longitude and latitude of the debt-collectors.
S303, constructing an initialization population based on the quantity of all the overdue customers and codes corresponding to the debt-collectors; and using the initialization population as a current population.

In this step, the electronic device may construct the initialization population based on the quantity of all the overdue customers and the codes corresponding to the debt-collectors; and use the initialization population as the current population. For example, assuming that there are 5 overdue customers, namely: overdue customer 1, overdue customer 2, overdue customer 3, overdue customer 4, and overdue customer 5. The electronic device may first allocate all the five overdue customers to collector 1, that is, the chromosome is 111111. A reasonable population may achieve faster convergence. Initially, a certain size of population size may be set (for example, S=2000000).

S304, calculating a collection cost corresponding to the current population using a fitness function, based on the initial paths of the debt-collectors and the overdue customers; where, the collection cost comprises at least: collection time-consuming and a collection travel expense.

In this step, the electronic device may calculate the collection cost corresponding to the current population using the fitness function, based on the initial paths of the debt-collectors and the overdue customers. The collection cost comprises at least: the collection time-consuming and the collection travel expense. The fitness function is an evaluation basis that reflects an individual's chance of survival and interprets the principle of "survival of the fittest" strategy. For this collection problem, the fitness function is that a total time consumption of all paths is the shortest, and the travel expense is below a certain range. In addition, it is also a small genetic algorithm for each collector to calculate the time-consuming and travel expense of all paths. For each collector, places to go are numbered as 1, 2, 3, 4...K, and the number of the collector itself is 0, so the chromosome is a combination of these numbers, such as 0134520. The number of this chromosome represents the order in which the collector visits collected customers; also, using the genetic algorithm, combined with information from Baidu map, the least time-consuming path and corresponding travel expense may be obtained.

S305, transforming the current population to obtain a new population, if the collection cost corresponding to the current population does not meet a preset convergence condition; using the new population as the current population; performing above operations repeatedly until the collection cost corresponding to the current population meets the preset convergence condition; and obtaining the target overdue customers that the debt-collectors are responsible for and the target paths of the debt-collectors and the target overdue customers that the debt-collectors are responsible for, based on the current population.

In this step, if the collection cost corresponding to the current population does not meet the preset convergence condition, the electronic device may transform the current population to obtain the new population; use the new population as the current population; perform above operations repeatedly until the collection cost corresponding to the current population meets the preset convergence condition; and obtain the target overdue customers that the debt-collectors are responsible for and the target paths of the debt-collectors and the target overdue customers that the debt-collectors are responsible for, based on the current population. The electronic device may extract two overdue customers from the current population as a current first overdue customer and a current second overdue customer respectively; and then exchange a collector corresponding to the current first overdue customer and a collector corresponding to the current second overdue customer to obtain the new population. For example, the electronic device may perform a "survival of the fittest" selection operation on an initial population based on the fitness function, the shortest path or the least expense has a higher probability of being selected. Using roulette to select a parent, this method may ensure that an excellent individual with higher fitness is more likely to be selected and saved. Based on a crossover probability, two parent individuals in the population randomly exchange part of gene segments to generate a new gene combination, which is intended to recombine to generate a new gene individual. For example, there are two chromosomes, 111111 (indicating that all 6 customers are visited by collector 1) and 222222 (indicating that all 6 customers are visited by collector 2), through crossover, it may become 111222 (the first three customers are visited by collector 1 and the latter three customers are visited by collector 2). In addition, the electronic device may also extract one overdue customer from the current population as a current overdue customer; and then change a collector corresponding to the current overdue customer to a new collector to obtain the new population. That is, mutation is to randomly change a fragment or gene position on a chromosome with a certain probability, makes partial changes to certain gene values on individuals in the population to achieve a local search optimization effect on the chromosome. For example, 111222 may be mutated to 112222 (that is, the first two customers are visited by collector 1 and the latter 4 customers are visited by collector 2). Repeat the above process to select the optimal individual, that is, the best method for allocating a collector. For each collector, after determining customers to be visited, corresponding paths and travel expenses may also be obtained using the genetic algorithm. Here, collector allocation and path planning are completed, and the system automatically generates a collection scheme and saves the scheme.

S306, providing the target overdue customers that the debt-collectors are responsible for and the target paths of the debt-collectors and the target overdue customers that the debt-collectors are responsible for to the debt-collectors, so that the debt-collectors collects loans, in accordance with the target overdue customers that the debt-collectors are responsible for and the target paths of the debt-collectors and the target overdue customers that the debt-collectors are responsible for.

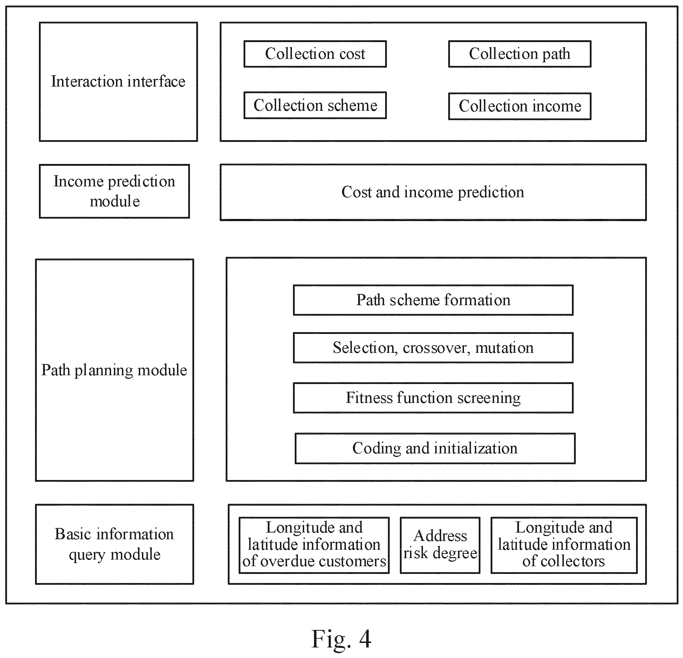

Fig. 4 is a schematic structural diagram of a system for collecting a loan provided by an embodiment of the present disclosure. As shown in Fig. 4, the system comprises: a basic information query module, a path planning module, an income prediction module and an interaction interface. The basic information query module is configured to acquire longitude and latitude information of overdue customers and longitude and latitude information of debt-collectors and an address risk degree. In order to plan a path and allocate a collector, first it is necessary to query the latitude and longitude of all the overdue customers and the debt-collectors. The address data also contain a lot of valuable information. Cluster analysis is a process of dividing and classifying samples having similar characteristics, and is an important means of acquiring knowledge from a large number of samples. By performing cluster analysis on an address of an overdue customer and dividing its region, collection may be performed in groups by region. The information may be displayed on the interaction interface, and a manager may understand the overdue situation in the regions by viewing this information. The overdue situation in different regions may be displayed on the interaction interface through different degrees of color. The darker the color, the more serious the overdue situation in that region. The information may be used as a reference variable in loan approval. The manager may also refer to risk levels of the regions to reduce the cost of later collection from the source. The path planning module is configured to query all possible collection paths using addresses of the overdue customers and the debt-collectors with Baidu map; and at the same time, obtain vehicles and transportation expenses under the corresponding paths. A result obtained from the query may be used in later overall planning. Further, the path planning module may implement functions as follows: coding and initialization, fitness function screening, selection, crossover, mutation, and path scheme formation. The income prediction module is used by a manager to make cost and income prediction. This module may accurately predict a collection cost based on a collection path, collection expense and the number of debt-collectors obtained by the path planning module, combined with collection time and a collector expense. After obtaining the collection cost, the module may combine a historical collection success rate and a total overdue amount to obtain a collection income. The collection income may be displayed on the interaction interface for the manager to query and reference. This module may also predict a company's collection costs over time and the number of overdue customers in different regions over time in a period of time in the future using existing data and using an LSTM timing model. The interaction interface is configured to provide the manager with information about all the debt-collectors and the overdue customers. This module may display the collection cost, collection path, collection scheme and collection income. The manager may inquire about the information of all the debt-collectors and the overdue customers through the interaction interface, comprising the addresses of the debt-collectors, the addresses of the overdue customers, an overdue amount, the number of overdue periods, etc. There is a map on the interaction interface, which may show real-time locations of the debt-collectors and address positions of customers being collected. The information is used to help the manager set a parameter during path planning. Through the interaction interface, the manager sets a variable of the path planning, such as an initial population size, a collection cost upper limit, a collection time upper limit, or the number of debt-collectors. The system recommends a path scheme based on the parameter set by the manager. If the manager thinks that the scheme is feasible, he/she may click to confirm the scheme. After the path planning scheme is determined, a particular route and a corresponding expense may be displayed on the interaction interface of a platform, allowing the manager to view and modify the path in time. The manager may view collection costs and incomes under different collection schemes through the interaction interface. In addition, the system may also comprise: a storage module, configured to store customer information, collection scheme, collection cost, collection income, etc. These contents may provide reference for the path planning next time.

The embodiment of the present disclosure applies artificial intelligence technology to post-loan collection, which enables the manager to allocate debt-collectors reasonably and plan collection routes reasonably, may reduce collection costs of consumer finance companies, has the following advantages: 1) Using Baidu map information, the latitude and longitude of an overdue customer, an actual distance between a collector and the overdue customer may be obtained. 2) Overall planning, fully considers the collection time and collection cost, may maximize the use of resources, improve collection efficiency, and reduce labor costs. 3) The user only needs to configure a constraint condition for path planning to automatically generate an entire collection scheme. The entire formulation process is very fast and convenient, and it is possible to view the collection cost and collection income in real time. 4) Formulated collection schemes may all be saved, which may provide reference for subsequent development of collection schemes. It may be applied to major consumer finance loan companies and bank structures.

The method for collecting a loan proposed in the embodiment of the present disclosure, first acquires the information on latitude and longitude of the overdue customers and on the longitude and latitude of the debt-collectors; then calculates the initial paths of the debt-collectors and the overdue customers, based on the information on latitude and longitude of the overdue customers and on the longitude and latitude of the debt-collectors; then calculates the target overdue customers that the debt-collectors are responsible for and the target paths of the debt-collectors and the target overdue customers that the debt-collectors are responsible for using the genetic algorithm, based on the initial paths of the debt-collectors and the overdue customers; and finally provides the target overdue customers that the debt-collectors are responsible for and the target paths of the debt-collectors and the target overdue customers that the debt-collectors are responsible for to the debt-collectors, so that the debt-collectors collects loans, in accordance with the target overdue customers that the debt-collectors are responsible for and the target paths of the debt-collectors and the target overdue customers that the debt-collectors are responsible for. That is, the present disclosure may use the genetic algorithm to calculate the target overdue customers that the debt-collectors are responsible for and the target paths of the debt-collectors and the target overdue customers that the debt-collectors are responsible for. However, in the existing methods for collecting a loan, the scheme of manual allocation is based on the principle of proximity, since there is no overall path planning, it may easily lead to high collection costs and low collection efficiency. Since the present disclosure uses the genetic algorithm to calculate the target overdue customers that the debt-collectors are responsible for and the target paths of the debt-collectors and the target overdue customers that the debt-collectors are responsible for, it overcomes the technical problem of easily leading to high collection costs and low collection efficiency due to the lack of overall path planning in the scheme of manual allocation based on the principle of proximity in the prior art. The technical solution provided by the present disclosure may effectively reduce collection costs and improve collection efficiency. In addition, the technical solution of the embodiments of the present disclosure is simple and convenient to implement, easy to popularize, and has a wider application range.

### Embodiment 4

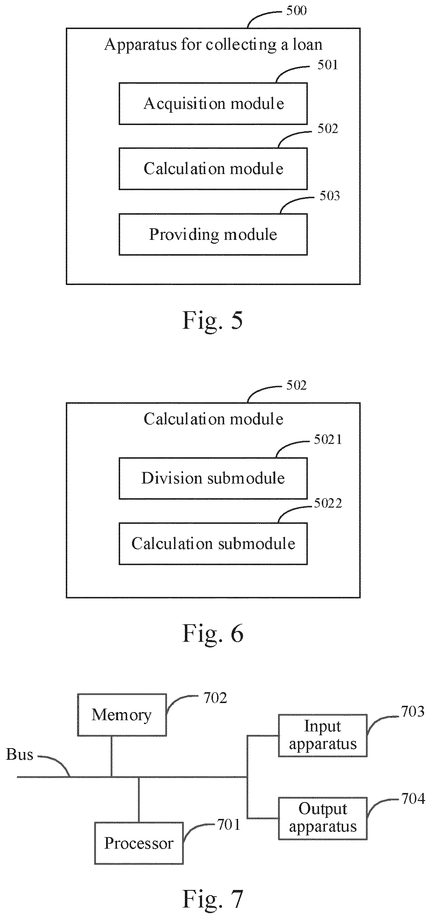

Fig. 5 is a schematic structural diagram of an apparatus for collecting a loan provided by an embodiment of the present disclosure. As shown in Fig. 5, the apparatus 500 comprises: an acquisition module 501, a calculation module 502 and a providing module 503.

The acquisition module 501 is configured to acquire information on latitude and longitude of overdue customers and debt-collectors respectively.

The calculation module 502 is configured to calculate initial paths of the debt-collectors and the overdue customers, based on the information on latitude and longitude of the overdue customers and the debt-collectors; calculate target overdue customers that the debt-collectors are responsible for and target paths of the debt-collectors and the target overdue customers that the debt-collectors are responsible for using a genetic algorithm, based on the initial paths of the debt-collectors and the overdue customers.

The providing module 503 is configured to provide the target overdue customers that the debt-collectors are responsible for and the target paths of the debt-collectors and the target overdue customers that the debt-collectors are responsible for to the debt-collectors, so that the debt-collectors collects loans, in accordance with the target overdue customers that the debt-collectors are responsible for and the target paths of the debt-collectors and the target overdue customers that the debt-collectors are responsible for.

Fig. 6 is a schematic structural diagram of a calculation module provided by an embodiment of the present disclosure. As shown in Fig. 6, the calculation module 502 comprises: a division submodule 5021 and a calculation submodule 5022.

The division submodule 5021 is configured to divide all the overdue customers into at least one location region based on the information on latitude and longitude of the overdue customers.

The calculation submodule 5022 is configured to calculate the initial paths of the debt-collectors and the overdue customers, based on the information on latitude and longitude of the debt-collectors and the location region corresponding to the overdue customers.

Further, the calculation module 502 is configured to: construct an initialization population based on a quantity of all the overdue customers and codes corresponding to the debt-collectors; and use the initialization population as a current population; calculate a collection cost corresponding to the current population using a fitness function, based on the initial paths of the debt-collectors and the overdue customers; where, the collection cost comprises at least: collection time-consuming and a collection travel expense; and transform the current population to obtain a new population, if the collection cost corresponding to the current population does not meet a preset convergence condition; use the new population as the current population; perform above operations repeatedly until the collection cost corresponding to the current population meets the preset convergence condition; and obtain the target overdue customers that the debt-collectors are responsible for and the target paths of the debt-collectors and the target overdue customers that the debt-collectors are responsible for, based on the current population.

Further, the calculation module 502 is configured to: extract two overdue customers from the current population as a current first overdue customer and a current second overdue customer respectively; and exchange a collector corresponding to the current first overdue customer and a collector corresponding to the current second overdue customer to obtain the new population.

Further, the calculation module 502 is configured to extract one overdue customer from the current population as a current overdue customer; and change a collector corresponding to the current overdue customer to a new collector to obtain the new population.

Further, the apparatus further comprises: a display module 504 (not shown in the figure), configured to set parameters of the preset convergence condition through a human-computer interaction interface; and the parameters of the preset convergence condition comprises at least one of: an initial population size, a collection cost upper limit, a collection time upper limit, or the quantity of debt-collectors.

The apparatus for collecting a loan may perform the method provided in any embodiment of the present disclosure, and has the corresponding functional modules and beneficial effects for performing the method. For technical details not described in detail in the present embodiment, reference may be made to the method for collecting a loan provided in any embodiment of the present disclosure.

According to an embodiment of the present disclosure, the present disclosure further provides an electronic device and a readable storage medium.

As shown in Fig. 7, which is a block diagram of an electronic device of a method for collecting a loan according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 7, the electronic device comprises: one or more processors 701, a memory 702, and interfaces for connecting various components, comprising high-speed interfaces and low-speed interfaces. The various components are connected to each other using different buses, and may be installed on a common motherboard or in other methods as needed. The processor may process instructions executed within the electronic device, comprising instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 7, one processor 701 is used as an example.

The memory 702 is a non-transitory computer readable storage medium provided by the present disclosure. The memory stores instructions executable by at least one processor, so that the at least one processor performs the method for collecting a loan provided by the present disclosure. The non-transitory computer readable storage medium of the present disclosure stores computer instructions for causing a computer to perform the method for collecting a loan provided by the present disclosure.

The memory 702, as a non-transitory computer readable storage medium, may be used to store non-transitory software programs, non-transitory computer executable programs and modules, such as program instructions/modules corresponding to the method for collecting a loan in the embodiments of the present disclosure (for example, the acquisition module 501, the calculation module 502, and the providing module 503 shown in Fig. 5). The processor 701 executes the non-transitory software programs, instructions, and modules stored in the memory 702 to execute various functional applications and data processing of the server, that is, to implement the method for collecting a loan in the foregoing method embodiment.

The memory 702 may comprise a storage program area and a storage data area, where the storage program area may store an operating system and at least one function required application program; and the storage data area may store data created by the use of the electronic device according to the method for processing parking, etc. In addition, the memory 702 may comprise a high-speed random access memory, and may also comprise a non-transitory memory, such as at least one magnetic disk storage device, a flash memory device, or other non-transitory solid-state storage devices. In some embodiments, the memory 702 may optionally comprise memories remotely provided with respect to the processor 701, and these remote memories may be connected to the electronic device of the method for collecting a loan through a network. Examples of the above network comprise but are not limited to the Internet, intranet, local area network, mobile communication network, and combinations thereof.

The electronic device of the method for collecting a loan may further comprise: an input apparatus 703 and an output apparatus 704. The processor 701, the memory 702, the input apparatus 703, and the output apparatus 704 may be connected through a bus or in other methods. In Fig. 7, connection through a bus is used as an example.

The input apparatus 703 may receive input digital or character information, and generate key signal inputs related to user settings and function control of the electronic device of the method for processing parking, such as touch screen, keypad, mouse, trackpad, touchpad, pointing stick, one or more mouse buttons, trackball, joystick and other input apparatuses. The output apparatus 704 may comprise a display device, an auxiliary lighting apparatus (for example, LED), a tactile feedback apparatus (for example, a vibration motor), and the like. The display device may comprise, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application particular integrated circuits), computer hardware, firmware, software, and/or combinations thereof. These various embodiments may comprise: being implemented in one or more computer programs that may be executed and/or interpreted on a programmable system that comprises at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) comprise machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, comprising machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (comprising acoustic input, voice input, or tactile input) may be used to receive input from the user.

The systems and technologies described herein may be implemented in a computing system that comprises backend components (e.g., as a data server), or a computing system that comprises middleware components (e.g., application server), or a computing system that comprises frontend components (for example, a user computer having a graphical user interface or a web browser, through which the user may interact with the implementations of the systems and the technologies described herein), or a computing system that comprises any combination of such backend components, middleware components, or frontend components. The components of the system may be interconnected by any form or medium of digital data communication (e.g., communication network). Examples of the communication network comprise: local area networks (LAN), wide area networks (WAN), the Internet, and blockchain networks.

The computer system may comprise a client and a server. The client and the server are generally far from each other and usually interact through the communication network. The relationship between the client and the server is generated by computer programs that run on the corresponding computer and have a client-server relationship with each other. The server may be a cloud server, also known as a cloud computing server or a cloud host. The server is a host product in the cloud computing service system to solve the defects of management difficulty in traditional physical host and virtual private server (VPS) services Large, and weak business scalability.

According to the technical solution of the embodiments of the present disclosure, first acquires the information on latitude and longitude of the overdue customers and the debt-collectors respectively; then calculates the initial paths of the debt-collectors and the overdue customers, based on the information on latitude and longitude of the overdue customers and the debt-collectors; then calculates the target overdue customers that the debt-collectors are responsible for and the target paths of the debt-collectors and the target overdue customers that the debt-collectors are responsible for using the genetic algorithm, based on the initial paths of the debt-collectors and the overdue customers; and finally provides the target overdue customers that the debt-collectors are responsible for and the target paths of the debt-collectors and the target overdue customers that the debt-collectors are responsible for to the debt-collectors, so that the debt-collectors collects loans, in accordance with the target overdue customers that the debt-collectors are responsible for and the target paths of the debt-collectors and the target overdue customers that the debt-collectors are responsible for. That is, the present disclosure may use the genetic algorithm to calculate the target overdue customers that the debt-collectors are responsible for and the target paths of the debt-collectors and the target overdue customers that the debt-collectors are responsible for. However, in the existing methods for collecting a loan, the scheme of manual allocation is based on the principle of proximity, since there is no overall path planning, it may easily lead to high collection costs and low collection efficiency. Since the present disclosure uses the genetic algorithm to calculate the target overdue customers that the debt-collectors are responsible for and the target paths of the debt-collectors and the target overdue customers that the debt-collectors are responsible for, it overcomes the technical problem of easily leading to high collection costs and low collection efficiency due to the lack of overall path planning in the scheme of manual allocation based on the principle of proximity in the prior art. The technical solution provided by the present disclosure may effectively reduce collection costs and improve collection efficiency. In addition, the technical solution of the embodiments of the present disclosure is simple and convenient to implement, easy to popularize, and has a wider application range.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure may be achieved, no limitation is made herein.

The above particular embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be comprised in the protection scope of the present disclosure.

## Claims

1. A method for collecting a loan, the method comprising:
acquiring (S101) information on latitude and longitude of overdue customers and debt-collectors, respectively;
calculating (S102) initial paths of the debt-collectors and the overdue customers, based on the acquired information;
calculating (S103) target overdue customers that the debt-collectors are responsible for and target paths of the debt-collectors and the target overdue customers that the debt-collectors are responsible for, by using a genetic algorithm, based on the initial paths of the debt-collectors and the overdue customers; and
providing (S104) the target overdue customers and the target paths to the debt-collectors, so that the debt-collectors collect loans in accordance with the target overdue customers and the target paths.

2. The method according to claim 1, wherein the calculating (S102) the initial paths comprises:
dividing (S202) all the overdue customers into at least one location region based on the information on latitude and longitude of the overdue customers; and
calculating (S203) the initial paths of the debt-collectors and the overdue customers, based on the information on latitude and longitude of the debt-collectors and the location region corresponding to the overdue customers.

3. The method according to any one of claims 1-2, wherein the calculating (S103) the target overdue customers and the target paths comprises:
constructing (S303) an initialization population based on a quantity of all the overdue customers and codes corresponding to the debt-collectors; and using the initialization population as a current population;
calculating (S304) a collection cost corresponding to the current population using a fitness function, based on the initial paths; wherein, the collection cost comprises at least: collection time-consuming and a collection travel expense; and
transforming (S305) the current population to obtain a new population, if the collection cost corresponding to the current population does not meet a preset convergence condition; using the new population as the current population; performing above operations repeatedly until the collection cost corresponding to the current population meets the preset convergence condition; and obtaining the target overdue customers and the target paths based on the current population.

4. The method according to claim 3, wherein the transforming (S305) comprises:
extracting two overdue customers from the current population as a current first overdue customer and a current second overdue customer respectively; and
exchanging a debt-collector corresponding to the current first overdue customer and a debt-collector corresponding to the current second overdue customer to obtain the new population.

5. The method according to claim 3, wherein the transforming (S305) comprises:
extracting one overdue customer from the current population as a current overdue customer; and
changing a debt-collector corresponding to the current overdue customer to a new debt-collector to obtain the new population.

6. The method according to claim 3, wherein the method further comprises:
setting parameters of the preset convergence condition through a human-computer interaction interface; and the parameters comprises at least one of: an initial population size, a collection cost upper limit, a collection time upper limit, or a quantity of debt-collectors.

7. An apparatus for collecting a loan, the apparatus comprising: an acquisition module (501), a calculation module (502) and a providing module (503);
wherein the acquisition module (501)is configured to acquire information on latitude and longitude of overdue customers and debt-collectors, respectively;
the calculation module (502) is configured to calculate initial paths of the debt-collectors and the overdue customers, based on the information on latitude and longitude of the overdue customers and the debt-collectors; calculate target overdue customers that the debt-collectors are responsible for and target paths of the debt-collectors and the target overdue customers that the debt-collectors are responsible for using a genetic algorithm, based on the initial paths of the debt-collectors and the overdue customers; and
the providing module (503) is configured to provide the target overdue customers and the target paths to the debt-collectors, so that the debt-collectors collect loans in accordance with the target overdue customers and the target paths.

8. The apparatus according to claim 7, wherein the calculation module (502) comprises: a division submodule and a calculation submodule; wherein,
the division submodule is configured to divide all the overdue customers into at least one location region based on the information on latitude and longitude of the overdue customers; and
the calculation submodule is configured to calculate the initial paths of the debt-collectors and the overdue customers, based on the information on latitude and longitude of the debt-collectors and the location region corresponding to the overdue customers.

9. The apparatus according to any one of claims 7-8, wherein the calculation module (502) is configured to:
construct an initialization population based on a quantity of all the overdue customers and codes corresponding to the debt-collectors; and use the initialization population as a current population;
calculate a collection cost corresponding to the current population using a fitness function, based on the initial paths; wherein, the collection cost comprises at least: collection time-consuming and a collection travel expense; and
transform the current population to obtain a new population, if the collection cost corresponding to the current population does not meet a preset convergence condition; use the new population as the current population; perform above operations repeatedly until the collection cost corresponding to the current population meets the preset convergence condition; and obtain the target overdue customers and the target paths based on the current population.

10. The apparatus according to claim 9, wherein the calculation module (502) is configured to:
extract two overdue customers from the current population as a current first overdue customer and a current second overdue customer respectively; and
exchange a debt-collector corresponding to the current first overdue customer and a debt-collector corresponding to the current second overdue customer to obtain the new population.

11. The apparatus according to claim 9, wherein the calculation module (502) is configured to
extract one overdue customer from the current population as a current overdue customer; and
change a debt-collector corresponding to the current overdue customer to a new debt-collector to obtain the new population.

12. The apparatus according to claim 9, wherein the apparatus further comprises: a display module, configured to set parameters of the preset convergence condition through a human-computer interaction interface; and the parameters comprises at least one of: an initial population size, a collection cost upper limit, a collection time upper limit, or a quantity of debt-collectors.

13. An electronic device, comprising:
at least one processor (701); and
a memory (702), communicatively connected to the at least one processor (701); wherein,
the memory (702), storing instructions executable by the at least one processor (701), the instructions, when executed by the at least one processor (701), cause the at least one processor (701) to perform the method according to any one of claims 1-6.

14. A non-transitory computer readable storage medium, storing computer instructions, the computer instructions, being used to cause a computer to perform the method according to any one of claims 1-6.

15. A computer program product comprising a computer program, the computer program, when executed by a processor (701), implementing the method according to any one of claims 1-6.
